# EUROPEAN PATENT SPECIFICATION

(11) **EP 3 125 099 B1**
(45) Date of publication and mention of the grant of the patent: **31.03.2021**
(21) Application number: 16180558.5
(22) Date of filing: 21.07.2016
(51) Int. Cl.: G06F 3/0488, G06F 3/0354

(54) **VEHICLE AND METHOD OF CONTROLLING THE SAME**
FAHRZEUG UND VERFAHREN ZUR STEUERUNG DAVON
TERMINAL ET SON PROCÉDÉ DE COMMANDE

(30) Priority: 29.07.2015 KR 20150107019
(43) Date of publication of application: 01.02.2017
(73) Proprietor: Hyundai Motor Company, Seoul 06797 (KR); Kia Motors Corporation, Seoul 06797 (KR); Hyundai Motor Europe Technical Center GmbH, 65428 Rüsselsheim (DE)
(72) Inventor: Prill, Andy Max, 65428 Rüsselsheim (DE); Joo, Sihyun, Seoul (KR); Lee, Jeong-Eom, Yongin-si, Gyeonggi-do (KR); Hong, Gi Beom, Bucheon-si, Gyeonggi-do (KR); Min, Jungsang, Seoul (KR)
(74) Representative: Isarpatent

(56) References cited:
- EP-A2- 2 284 673
- DE-A1-102012 018 354
- KR-A- 20080 033 739
- US-A1- 2011 030 502
- US-B2- 8 259 077

## Description

### BACKGROUND

### 1. Field of the Invention

The present invention relates to a vehicle that includes a touch input device in which a concave region is provided and a method of controlling the same.

### 2. Description of the Related Art

DE 10 2012 018 354 A1 discloses a control device for a vehicle comprising a touch pad-interface which is formed with a touch pad including two separated areas.

US 2011/030502 A1 discloses a motor vehicle including a steering wheel and a touchpad integrated into the steering wheel, situated in a channel, and adapted to input commands
KR20080033739A is directed to a user interface in a vehicle with a circular arrangement of characters which can be selected for a user input.

With the development of vehicle technology, various functions for the convenience of passengers are provided in addition to driving, which is a basic function performed by a vehicle. Due to the various functions performed by the vehicle, a driver's operation load of the vehicle may be increased. The increase in the operation load becomes one factor which prevents safe driving by reducing a concentration degree of a driver's operation. Further, since difficulty of the operation may increase as the number of functions increases, a driver who cannot easily operate the vehicle may be unable to properly utilize the functions which will be performed by the vehicle.

Accordingly, research regarding input devices for vehicles has been conducted to reduce the driver's operation load and the difficulty of the operation. A typical example according to the related art of the input devices for vehicles is a touch input device which detects a touch or pressure of the driver. The driver may control the vehicle by touching or applying pressure to the touch input device without complex operations.

### SUMMARY

The present invention provides a vehicle according to claim 1, and a method according to claim 9.

Therefore, the present invention provides a vehicle that may include a display configured to display a selection of an object by detecting a touch gesture moving from an edge of a concave region to the center thereof and a method of controlling the same. Additional aspects of the invention will be set forth in part in the description which follows and, in part, will be obvious from the description, or may be learned by practice of the invention.

In accordance with one aspect of the present invention, a vehicle may include a display configured to display a user interface (UI) including a plurality of objects, a touch input device that has a concave region where a touch gesture may be detected, and a controller configured to operate the display to display a selection of an object that corresponds to a first position among the plurality of objects when a gesture moving from the first position on a periphery of the concave region to the center thereof is detected.

The touch input unit may include the concave region divided into a second region formed at the center in a circular shape and a first region formed to surround a circumferential edge of the second region. The controller may be configured to operate the display to display that the object corresponding to the first position among the plurality of objects is in a selectable state when a touch is detected at the first position of the first region.

The controller may further be configured to operate the display to display the selection of the object in the selectable state when a gesture moving from the first position of the first region to the second region is detected. The controller may be configured to operate the display to display a cancellation of the selection of the selected object when a gesture which continuously moves to the first region after the gesture moves to the second region is detected. When a gesture moving from a second position of the first region to the first position is detected, the controller may be configured to operate the display to display a change of the object in a selectable state among the plurality of objects in a direction that corresponds to the movement of the gesture.

The touch input device may be configured to detect a pressure applied to the concave region. The controller may be configured to operate the display to display a selection of the object that corresponds to the first position when a gesture moving from the first position to the second region is detected after the pressure is detected at the first position. The controller may further be configured to operate the display to display a selection of the object that corresponds to the first position when the pressure is detected in the second region after a gesture moving from the first position to the second region is detected. Further, the controller may be configured to operate the display to display a selection of the object that corresponds to the first position when the pressure is detected in the second region, after the pressure is detected at the first position and a gesture moving from the first position to the second region is detected. The display may be configured to display or output the UI in which the plurality of objects are displayed to surround a predetermined reference point.

In accordance with another aspect of the present invention, a method of controlling a vehicle that includes a touch input device having a concave region at which a touch gesture may be detected, may include displaying a UI including a plurality of objects, and when a gesture moving from a first position on a periphery of the concave region to the center thereof is detected, displaying a selection of an object that corresponds to the first position among the plurality of objects.

The method may further include dividing the concave region into a second region formed at the center thereof in a circular shape and a first region formed to surround a circumferential edge of the second region. The displaying of the selection of the object that corresponds to the first position may include displaying that the object that corresponds to the first position among the plurality of objects is in a selectable state when a touch is detected at the first position of the first region. The displaying of the selection of the object that corresponds to the first position may further include displaying the selection of the object in a selectable state when a gesture moving from the first position of the first region to the second region is detected.

The method may further include displaying a cancellation of the selection of the selected object when a gesture which continuously moves to the first region after the gesture moves to the second region is detected. When a gesture moving from a second position of the first region to the first position is detected, the displaying of the selection of the object that corresponds to the first position may further include displaying a change of the object in a selectable state among the plurality of objects in a direction that corresponds to the movement of the gesture. The touch input device may be configured to detect a pressure in the concave region.

Additionally, the displaying the selection of the object that corresponds to the first position may include displaying a selection of the object that corresponds to the first position when a gesture moving from the first position to the second region is detected after the pressure is detected at the first position. The displaying of the selection of the object that corresponds to the first position may include displaying a selection of the object that corresponds to the first position when the pressure is detected in the second region after a gesture moving from the first position to the second region is detected. The displaying of the selection of the object that corresponds to the first position may include displaying a selection of the object that corresponds to the first position when the pressure in the second region is detected, after the pressure is detected at the first position and a gesture moving from the first position to the second region is detected. The displaying of the UI may include displaying or outputting the UI in which the plurality of objects are displayed to surround a predetermined reference point.

### BRIEF DESCRIPTION OF THE DRAWINGS

These and/or other aspects of the invention will become apparent and more readily appreciated from the following description of the exemplary embodiments, taken in conjunction with the accompanying drawings of which:
FIG. 1 is a view illustrating an exterior of a vehicle according to one exemplary embodiment of the present invention;
FIG. 2 is a view illustrating an internal configuration of a vehicle according to one exemplary embodiment of the present invention;
FIG. 3 is a control block diagram of a vehicle according to one exemplary embodiment of the present invention;
FIGS. 4A to 4C are views illustrating various exemplary embodiments of user interfaces (UIs) displayed on a display according to an exemplary embodiment of the present invention;
FIG. 5A is a perspective view of a touch input device according to one exemplary embodiment of the present invention;
FIG. 5B is a plan view of the touch input device according to one exemplary embodiment of the present invention;
FIG. 5C is a cross-sectional view taken along line A-A of FIG. 5B of the touch input device according to one exemplary embodiment of the present invention;
FIG. 6A is a perspective view of a touch input device according to another exemplary embodiment of the present invention;
FIG. 6B is a plan view of the touch input device according to another exemplary embodiment of the present invention;
FIG. 6C is a cross-sectional view taken along line B-B of FIG. 6B of the touch input device according to another exemplary embodiment of the present invention;
FIG. 7 is a view of when a concave region of the touch input device according to the exemplary embodiments according to the present invention described with reference to FIGS. 5A to 5C is divided;
FIGS. 8A and 8B are views illustrating a method of receiving input of object select gestures through the touch input device according to the exemplary embodiments of the present invention described with reference to FIGS. 6A to 6C;
FIGS. 9A to 9C are views illustrating a method of operating a UI by a controller according to touch gestures described with reference to FIGS. 8A and 8B according to an exemplary embodiment of the present invention; and
FIG. 10 is a flowchart of a method of controlling a vehicle according to one exemplary embodiment of the present invention.

### DETAILED DESCRIPTION

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, combustion, plug-in hybrid electric vehicles, hydrogen-powered vehicles and other alternative fuel vehicles (e.g. fuels derived from resources other than petroleum).

Although exemplary embodiment is described as using a plurality of units to perform the exemplary process, it is understood that the exemplary processes may also be performed by one or plurality of modules. Additionally, it is understood that the term controller/control unit refers to a hardware device that includes a memory and a processor. The memory is configured to store the modules and the processor is specifically configured to execute said modules to perform one or more processes which are described further below.

Furthermore, control logic of the present invention may be embodied as non-transitory computer readable media on a computer readable medium containing executable program instructions executed by a processor, controller/control unit or the like. Examples of the computer readable mediums include, but are not limited to, ROM, RAM, compact disc (CD)-ROMs, magnetic tapes, floppy disks, flash drives, smart cards and optical data storage devices. The computer readable recording medium can also be distributed in network coupled computer systems so that the computer readable media is stored and executed in a distributed fashion, e.g., by a telematics server or a Controller Area Network (CAN).

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Reference will now be made in detail to the exemplary embodiments of the present invention, examples of which are illustrated in the accompanying drawings, wherein like reference numerals refer to like elements throughout.

Hereinafter, a vehicle and a method of controlling the same will be described with reference to the accompanying drawings in detail.

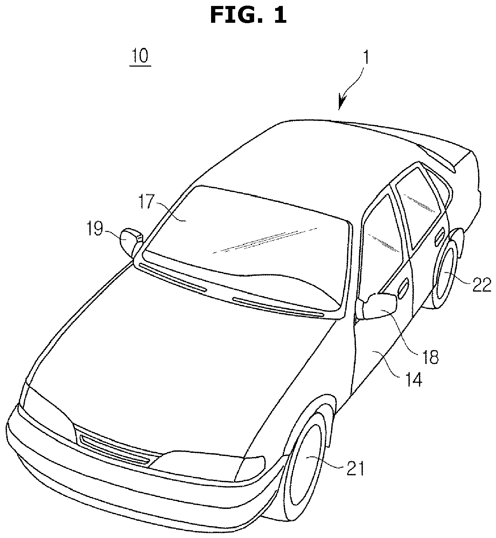

FIG. 1 is a view illustrating an exterior of a vehicle according to one exemplary embodiment. As shown in FIG. 1, he vehicle according to one exemplary embodiment may include a body 10 which forms the exterior of a vehicle 1, a plurality of wheels 21 and 22 which move the vehicle 1, doors 14 which shield the inside of the vehicle 1 from the exterior, a front glass 17 which provides a view ahead of the vehicle 1 to a driver within the vehicle 1, and side mirrors 18 and 19 which provide a view in a rearward direction of the vehicle 1 to the driver.

The wheels 21 and 22 include front wheels 21 disposed at the front of the vehicle 1, and rear wheels 22 disposed at the rear of the vehicle 1. The front wheels 21 or the rear wheels 22 may be configured to receive rotatory power from a driving device to be described below, and the body 10 may be moved in a forward or rearward direction. The doors 14 may be rotatable on left and right sides of the body 10. When the door 14 is open, a driver may enter into the vehicle 1, and when the door 14 is closed, the inside of the vehicle 1 is shielded from the exterior. The front glass 17 may be disposed on a forward top side of the body 10 to provide the driver inside the vehicle 1 within visual information in front of the vehicle 1, and the front glass 17 may also be referred to as a windshield glass. Further, the side mirrors 18 and 19 include a left side mirror 18 disposed on a left side of the body 10 and a right side mirror 19 disposed on a right side thereof to provide the driver inside the vehicle 1 with visual information in lateral and rearward directions of the vehicle 1.

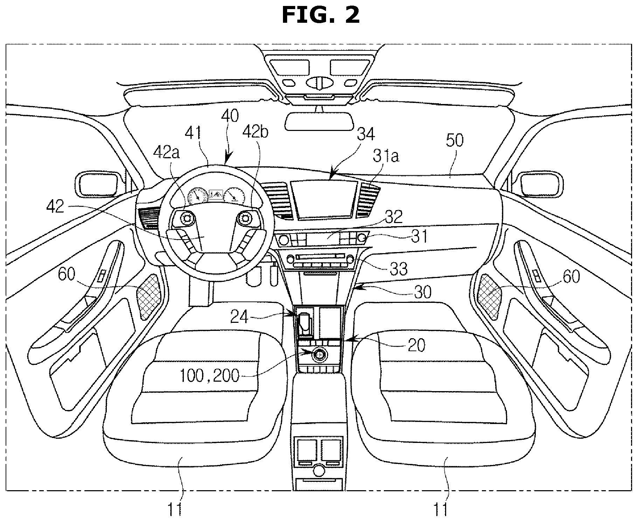

FIG. 2 is a view illustrating an internal configuration of a vehicle according to one exemplary embodiment. As shown in FIG. 2, the vehicle 1 may include seats 11 on which a driver and/or the like may sit, a gear box 20, a dashboard 50 including a center fascia 30, a steering wheel 40, etc., and speakers 60.

A gearshift 24 configured to change the speed of the vehicle 1 and a touch input device 100 or 200 configured to execute function operations of the vehicle 1 may be installed in the gear box 20. The touch input devices 100 and 200 will be described below. The steering wheel 40 disposed in the dashboard 50 is a device configured to adjust a driving direction of the vehicle 1 and may be connected to a rim 41 to be griped by the driver and a steering device of the vehicle 1, and may include a spoke 42 which connects a hub of a rotational shaft for steering and the rim 141. In some exemplary embodiments, operating devices 42a and 42b may be formed in the spoke 142 of the rim 41 to operate various types of devices, e.g., an audio device, etc., included in the vehicle 1.

An air conditioning device 31, a clock 32, an audio device 33, a display, and/or the like may be installed in the center fascia 30 of the dashboard 50. The air conditioning device 31 may be configured to adjust a temperature, humidity, air cleanness, and an air flow within the vehicle 1 and may be configured to maintain a driver selected temperature within the vehicle 1. The air conditioning device 31 may be installed in the center fascia 30 and may include at least one outlet 31a through which air may be discharged. Further, various buttons, dials, and/or the like may be installed in the center fascia 30 to operate the air conditioning device 31, etc. Passengers, such as the driver, etc., may operate the air conditioning device 31 using the buttons or other input devices disposed in the center fascia 30. The clock 32 may be disposed on the periphery of the buttons or dials used to operate the air conditioning device 31. The audio device 33 may include an operating panel having a plurality of buttons used to execute functions of the audio device 33. The audio device 33 may provide a radio mode which provides a function of a radio and a media mode which replays audio files included in various storage media having audio files.

Furthermore, the display 34 may be configured to display a user interface (UI) in which information regarding the vehicle 1 is provided in an image or text form. Accordingly, the display 34 may be formed to be embedded in the center fascia 30. However, the installation of the display is not limited to the above example, and the display may be detachable from the center fascia 30 of the vehicle 1. A detailed operation of the display will be described below. In particular, the display 34 may be implemented as a liquid crystal display (LCD), a light emitting diode (LED), a plasma display panel (PDP), an organic light emitting diode (OLED), a cathode ray tube (CRT), etc., but is not limited thereto.

In addition, the dashboard 50 may further include various types of instrument panels capable of displaying a driving speed, engine revolutions per minute (RPM), a fuel level, and/or the like of the vehicle 1, a glove box capable of accommodating various types of objects, etc. The speakers 60 configured to output sound may be mounted within the vehicle 1. Each speaker may be configured to output information regarding the vehicle 1 as a sound. For example, when the vehicle 1 receives an output signal to output a recommended driving method, the speakers 60 may be configured to provide passengers with information regarding the recommended driving method by outputting the recommended driving method by sound.

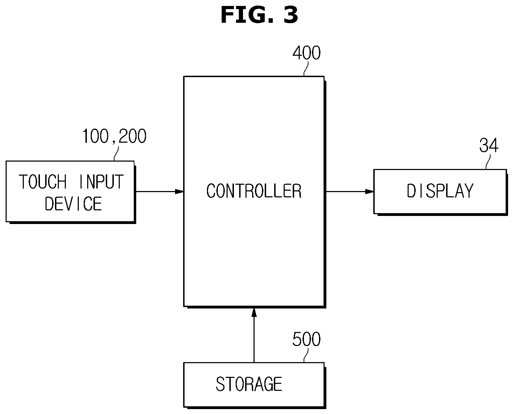

Meanwhile, the vehicle may be configured to provide the UI to the driver through the display, and the UI may be operated based on a control command input by the driver through the above-described touch input devices. Hereinafter, a method of operating the UI of the vehicle according to one exemplary embodiment will be described with reference to FIG. 3. FIG. 3 is a control block diagram of a vehicle according to one exemplary embodiment.

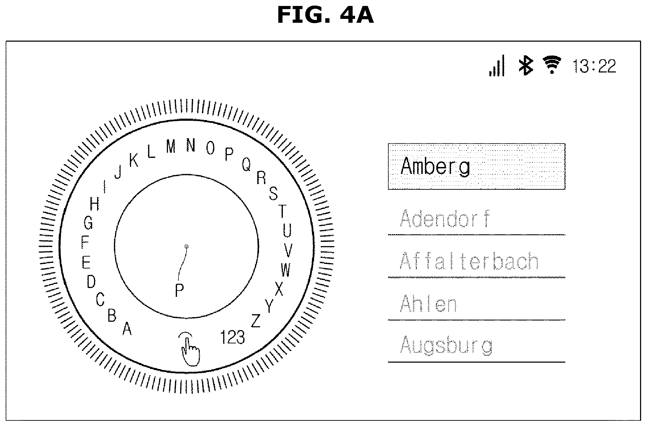

To operate an UI, the vehicle may include a touch input device 100 or 200 configured to detect a touch gesture, a display 34 configured to display the UI, a storage 500 configured to store a control command that corresponds to the touch gesture, and a controller 400 configured to operate the display 34 to output the UI being displayed based on the touch gesture. The storage 500 may be configured to pre-store the control command that corresponds to the touch gesture detected using the touch input device 100 or 200. The storage 500 may then be configured to provide the pre-stored control command to the controller 400 to be described below. The display 34 may be configured to display, based on a control command from the controller 400, an object selected by a passenger through the UI. Accordingly, the UI being displayed on the display 34 may include a plurality of objects arranged in a circular or elliptical shape. Hereinafter, various exemplary embodiments of the UIs displayed on the display 34 will be described with reference to FIGS. 4A to 4C.

FIGS. 4A to 4C are views for describing various exemplary embodiments of UIs displayed on a display. In particular, to receive input of object selection through the touch input device 100 or 200, the display 34 may be configured to display a UI arranged in which a plurality of objects surround a predetermined reference point P. The object may be all objects which may be selected by input of a passenger. An exemplary embodiment of the object may include a text input by selection of the passenger, an icon to execute a selected application, a folder including the icon to execute the selected application, and a parent folder including a subfolder.

FIG. 4A is an example a text input UI searching for pre-stored text combinations. Text objects arranged to surround a predetermined reference point P may be positioned at a left side of the text input UI. Further, the text input UI may sequentially display the selected text in a rectangular box positioned at an upper right portion of the text input UI, and text combinations recommended to the passenger may be displayed under the rectangular box.

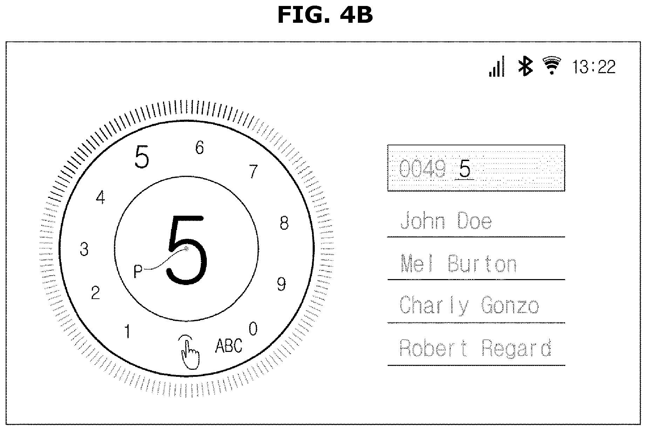

FIG. 4B is an example of a numeral input UI of the text input UI searching for pre-stored phone numbers. Numeral objects arranged to surround a predetermined reference point P may be positioned at a left side of the numeral input UI similar to FIG. 4A. The numeral input UI may sequentially display the selected numeral in a rectangular box positioned at an upper right portion of the numeral input UI, and names of the phone numbers which are recommended to a passenger may be displayed under the rectangular box.

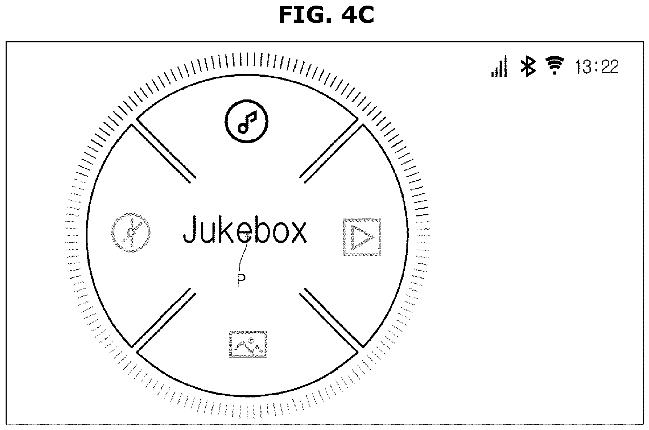

FIG. 4C is an example of an application execution UI for executing pre-stored applications. In the application executing UI, different application icons may be arranged to surround a predetermined reference point P. In addition to the examples shown in FIGS. 4A to 4C, the UI being displayed by the display 34 may be implemented as various types within the technical aspects in which the plurality of objects are arranged to surround a predetermined reference point P.

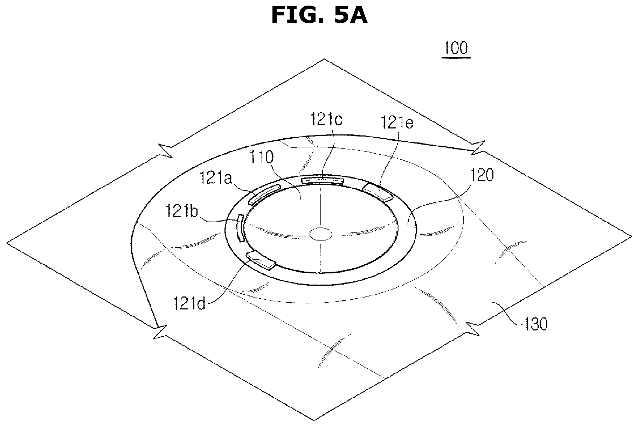

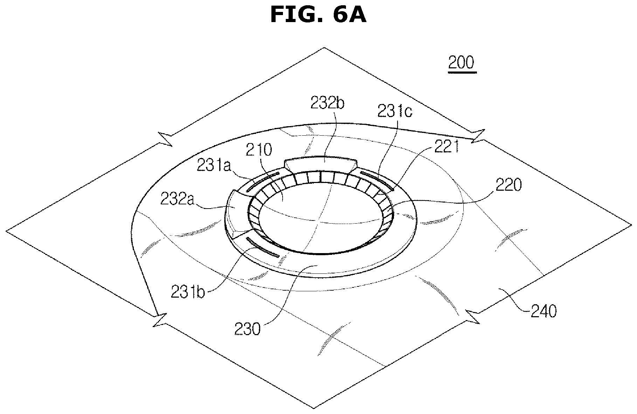

Referring again to FIG. 3, the touch input device 100 or 200 may be configured to detect or sense a touch of a passenger including a driver using various sensors. Accordingly, the touch input device 100 or 200 may include a concave region (e.g., in an inward direction), and the touch may be detected in the concave region. Hereinafter, various exemplary embodiments of the touch input devices 100 and 200 will be described with reference to FIGS. 5A to 5C and 6A to 6C.

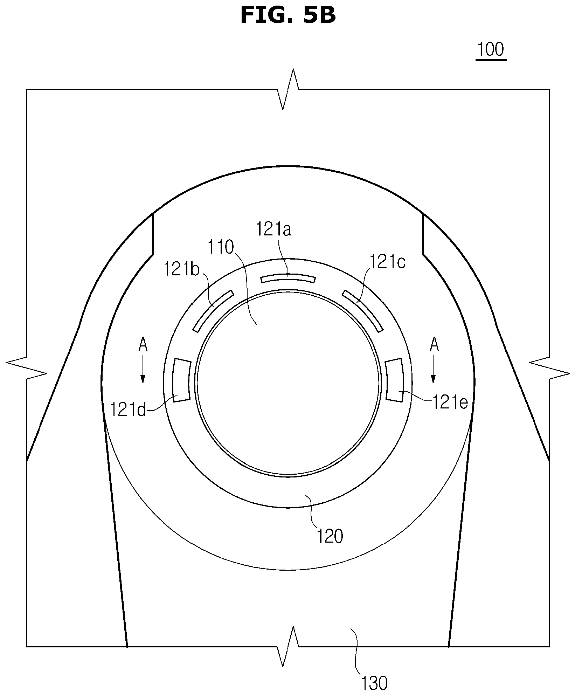

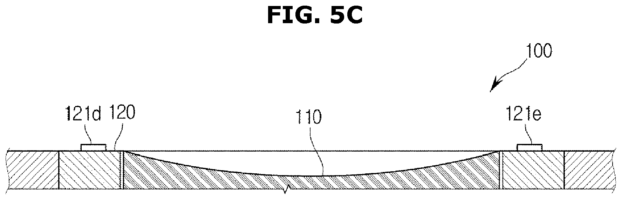

FIG. 5A is a perspective view of a touch input device according to one exemplary embodiment, FIG. 5B is a plan view of the touch input device according to one exemplary embodiment, and FIG. 5C is a cross-sectional view taken along line A-A of FIG. 5B of the touch input device according to one exemplary embodiment. The touch input device shown in FIGS. 5A to 5C may include a touch unit 110 configured to detect a touch of a passenger, and an edge portion 120 that surrounds the touch unit 110.

Particularly, the touch unit 110 may be a touchpad configured to generate a signal when a passenger contacts or approaches (e.g., applies pressure to) the touchpad using a pointer such as a finger, touch pen, or any other detectable object. The passenger may input a desired control command by inputting a predetermined touch gesture into the touch unit 110. The touchpad may include a touch film, a touch sheet, or the like including a touch sensor. Further, the touchpad may include a touch panel which is the display 34 having a touch screen.

Meanwhile, the recognition of a position of the pointer in a state of approaching, but not contacting, the touchpad may be referred to as a proximity touch method, and the recognition of a position when the pointer is in a state of contacting the touchpad may be referred to as a contact touch method. In particular, a position of the proximity touch may correspond to a position where the pointer is perpendicular to the touchpad when the pointer approaches the touchpad.

Furthermore, the touchpad may use a resistive method, an optical method, a capacitive method, an ultrasonic method, a pressure method, etc. In other words, the touchpad may use various well-known methods of touchpads. The edge portion 120 may indicate a portion that surrounds the touch unit 110, and may be provided as a separate member from the touch unit 110. Key buttons or touch buttons 121, i.e., 121a to 121e, that surround the touch unit 110 may be positioned on the edge portion 120. In other words, a passenger may input a control command by a touch on the touch unit 110, or may input the control command using buttons 121 disposed on the edge portion 120 that surrounds the touch unit 110.

The touch input device according to the exemplary embodiment may further include a wrist support unit 130 configured to support the wrist of the passenger. In particular, the wrist support unit 130 may be positioned at a higher level (e.g., position) than the touch unit 110 to prevent the wrist of the passenger from bending when the finger of the passenger touches the touch unit 110 when the wrist of the passenger is supported by the wrist support unit 130. Thus, a musculoskeletal disease of the passenger may be prevented and a comfortable operation of the touch input device may be provided.

The touch unit 110 may include a portion at a lower level (e.g., position) than a boundary between the touch unit 110 and the edge portion 120. In other words, a touch surface of the touch unit 110 may be positioned at a lower level than the boundary between the touch unit 110 and the edge portion 120. For example, the touch surface may be disposed to slope downward from a boundary between the touch surface and the edge portion 120, or may be positioned to have a stepped boundary between the touch surface and the edge portion 120. For example, the touch unit 110 according to the exemplary embodiment described with reference to FIG. 4C may include a curved surface that has a concave curved surface region.

Since the touch unit 110 may include the portion at the lower level than the boundary between the touch unit 110 and the edge portion 120, the passenger may recognize a region of the touch unit 110 and the boundary by a touch. In the touch input device, a detection rate of touches at a central portion of the touch unit 110 may be improved. Further, since the touch region and the boundary may be intuitively recognized by a sense of touch when the passenger inputs the touch, the passenger may input the touch at a more accurate position, and thus an input accuracy of the touch may be improved.

The touch unit 110 may include a concave region. In particular, the concavity refers to a dented (U) or recessed shape, and may include a rounded shape in a curved slope, and also a shape having a slope or a stepped shape. Referring to FIG. 5C, the touch unit 110 may include a concave curved surface region. In particular, different curved surfaces of the touch unit 110 may be provided. For example, a curvature of a central portion thereof may be provided to be minimal (i.e., a large curvature radius), and a curvature of an outer portion thereof may be provided to be substantial (i.e., a minimal curvature radius). Since the touch unit 110 may include the curved surface, a sense of touch or sense of manipulation of the passenger may be improved when the passenger inputs the touch. The curved surface of the touch unit 110 may be provided to be similar to a trajectory of a fingertip when a person moves a finger when the wrist of the person is fixed, or when rotating or twisting the wrist when the finger is extended.

Further, the touch unit 110 may be provided in a circular shape. When the touch unit 110 is provided in the circular shape, formation of the concave curved surface region may be simplified. Further, since the touch unit 110 may be provided in the circular shape and the passenger may detect a touch region of the touch unit 110 in the circular shape by the sense of touch, a rolling or spin operation may be input more easily. In addition, since the touch unit 110 may be provided with the curved surface, the passenger may be intuitively aware of a position where the finger of the passenger is positioned on the touch unit 110. Further, certain points of the touch unit 110 may have different slopes. Accordingly, the passenger may be intuitively aware of the position of the finger positioned on the touch unit 110 through a sense of a slope sensed using the finger. This feature provides feedback with respect to the position where the finger is positioned on the touch unit 110 when a gesture of the passenger is input to the touch unit 110 when the passenger is focused on another place instead of the touch unit 110 (e.g., passenger is distracted), and thus the feature may assist to input a desired gesture of the passenger and an input accuracy of the gesture may be improved.

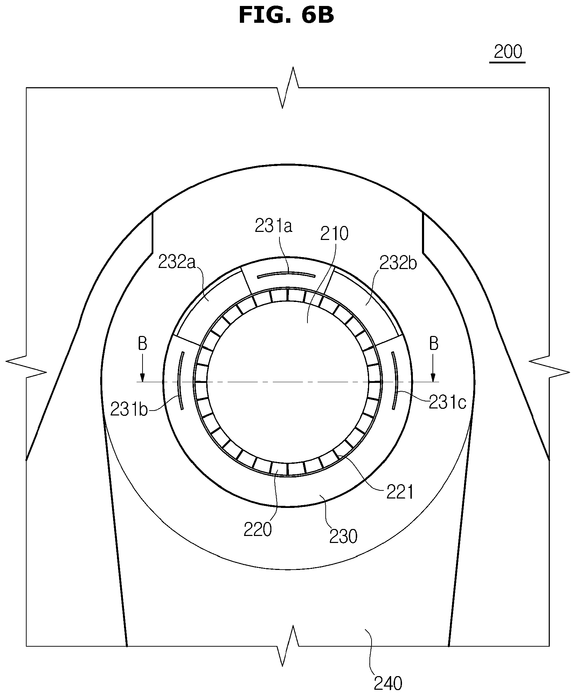

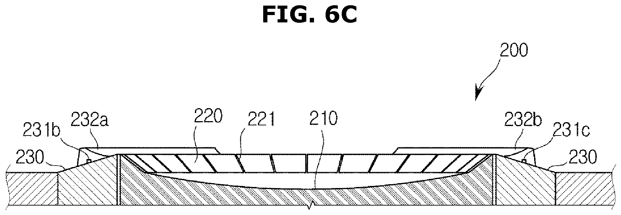

Unlike those shown in FIG. 5A to 5C, the concave region of the touch input device may also be divided into a central portion and an outer portion. Hereinafter, a case in which the concave region of the touch input device is divided into a gesture input unit in the central portion and a swiping input unit in the outer portion will be described with reference to FIGS. 6A to 6C in detail. FIG. 6A is a perspective view of a touch input device according to another exemplary embodiment, FIG. 6B is a plan view of the touch input device according to another exemplary embodiment, and FIG. 6C is a cross-sectional view taken along line B-B of FIG. 6B of the touch input device according to another exemplary embodiment. A touch input device 200 shown in FIGS. 6A to 6C may include touch units 210 and 220 configured to detect a touch of a passenger, and an edge portion 230 that surrounds the touch units 210 and 220. A touch detection method of the touch unit is the same as the exemplary embodiment described with reference to FIGS. 5A to 5C.

The edge portion 230 may refer to a portion that surrounds the touch units 210 and 220, and may be provided as a separate member from the touch units 210 and 220. Additionally, a plurality of key buttons 232a and 232b or touch buttons 231a, 231b, and 231c that surround the touch units 210 and 220 may be positioned on the edge portion 230. In other words, the passenger may input a gesture to the touch units 210 and 220, and a signal may be input through buttons 231 and 232 disposed on an edge portion 230 on the periphery of the touch units 210 and 220. Further, as shown in FIGS. 5A to 5C, the touch input device 200 may further include a wrist support unit 240 positioned at a lower level than a gesture input unit, which supports the wrist of the passenger.

Referring to FIG. 6C, the touch units 210 and 220 may include portions at a lower level (e.g., lower position) than boundaries between the touch units 210 and 220 and the edge portion 230. In other words, touch surfaces of the touch units 210 and 220 may be respectively positioned at lower levels than the boundaries between the touch unit 210 and 220 and the edge portion 230. For example, the touch surfaces may slope downward from the respective boundaries between the touch surfaces and the edge portion 230, or may be positioned to be respectively stepped from the boundaries between the touch surfaces and the edge portion 230. Meanwhile, as shown in FIG. 5C, the touch units 210 and 220 may include a gesture input unit 210 having a concave curved surface shape.

The touch units 210 and 220 may include a concave region like that shown in FIGS. 5A to 5C. The touch units 210 and 220 according to a second exemplary embodiment of the present invention may include a swiping input unit 220 that may slope downward along an edge of the gesture input unit 210. When the touch units 210 and 220 are in circular shapes, the gesture input unit 210 may be a part of a spherical shape, and the swiping input unit 220 may be disposed to surround a circumference of the gesture input unit 210.

The swiping input unit 220 may be configured to detect a swiping gesture. For example, a passenger may input the swiping gesture along the swiping input unit 220 provided in the circular shape. The passenger may input the swiping gesture in a clockwise direction along the swiping input unit 220, or input the swiping gesture in a counterclockwise direction. The swiping input unit 220 may include gradations 221 that may visually or tactually inform a passenger of relative positions. For example, the gradations 221 may be formed in a concave or convex shape. Each of the gradations 221 may be disposed at regular or predetermined intervals. Accordingly, the passenger may be intuitively aware of the number of the gradations 221 passing through a finger of the passenger in a swiping operation, and thus a length of the swiping gesture may be finely adjusted. In one exemplary embodiment, a cursor displayed on the display 34 may move based on the number of the gradations 221 passing through the finger in the swiping gesture. When various selectable texts are continuously disposed on the display 34, a selected text may move laterally one space whenever one gradation 221 is passed by a swiping operation of the passenger.

The swiping input unit 220 according to the exemplary embodiment described with reference to FIGS. 6A to 6C may include a gradient of a boundary between the swiping input unit 220 and the gesture input unit 210 greater than a gradient in a tangential direction of the swiping input unit 220. The passenger may intuitively sense the gesture input unit 210 by the provided greater gradient of swiping input unit 220 than that of the gesture input unit 210 when a gesture of the passenger is input into the gesture input unit 210. Meanwhile, a touch on the swiping input unit 220 may not be recognized while inputting the gesture into the gesture input unit 210. Thus, even when the gesture of the passenger approaches the boundary between the gesture input unit 210 and the swiping input unit 220 while inputting the gesture into the gesture input unit 210, gesture input of the gesture input unit 210 and swiping gesture input of the swiping input unit 220 may not overlap.

In the touch units 210 and 220, the gesture input unit 210 and the swiping input unit 220 may be formed integrally. Meanwhile, a touch sensor may be separately provided in each of the gesture input unit 210 and the swiping input unit 220, or one touch sensor may be provided for both of them. When one touch sensor is disposed within the gesture input unit 210 and the swiping input unit 220, the controller 400 may be configured to distinguish a signal generated by a touch on the gesture input unit 210 and a signal generated by a touch on the swiping input unit 220 by distinguishing a touch region of the gesture input unit 210 and a touch region of the swiping input unit 220. The touch input device 200 may further include button input units 231 and 232. The button input units 231 and 232 may be positioned on the periphery of the touch units 210 and 220. The button input units 231 and 232 may include touch buttons 231a, 231b, and 231c which may perform designated functions by a touch of the passenger, or pressed (e.g., engaged) buttons 232a and 232b which may perform designated functions when positions thereof may be changed by an external force of the passenger.

Referring again to FIG. 3, the controller 400 may be configured to operate the display 34 to display any one selected object of the plurality of objects included in the UI being displayed on the display 34 based on a touch detected in the concave region of the touch input device 100 or 200. Prior to operating the display 34 to operate the UI, the controller 400 may be configured to divide the concave region of the touch input device 100 or 200.

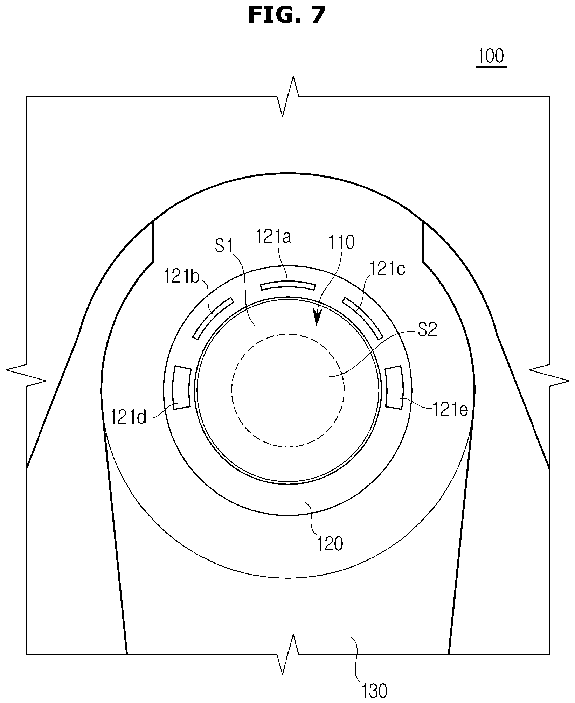

FIG. 7 is an example when a concave region of the touch input device according to the exemplary embodiments described with reference to FIGS. 5A to 5C is divided. When a touch input device 100 adopts the exemplary embodiment described with reference to FIGS. 5A to 5C, the controller 400 may be configured to divide the touch unit formed with the concave region into a second region S2 in a circular shape in the center thereof and a first region S1 formed to surround a circumferential edge of the second region S2.

Furthermore, even when the touch input device 200 is based on the exemplary embodiment described with reference to FIGS. 6A to 6C, the controller 400 may be configured to divide the concave region into the first region S1 and the second region S2. Specifically, the controller 400 may be configured to set the first region S1 which is a swiping input unit of the touch unit formed with the concave region, and the second region S2 which is a gesture input unit of the touch unit. When the concave region of the touch input device 100 or 200 is divided into the first region S1 and the second region S2, the controller 400 may be configured to operate the display 34 to output the UI on the display 34 and then operate the UI based on touch gestures detected using the touch input device 100 or 200.

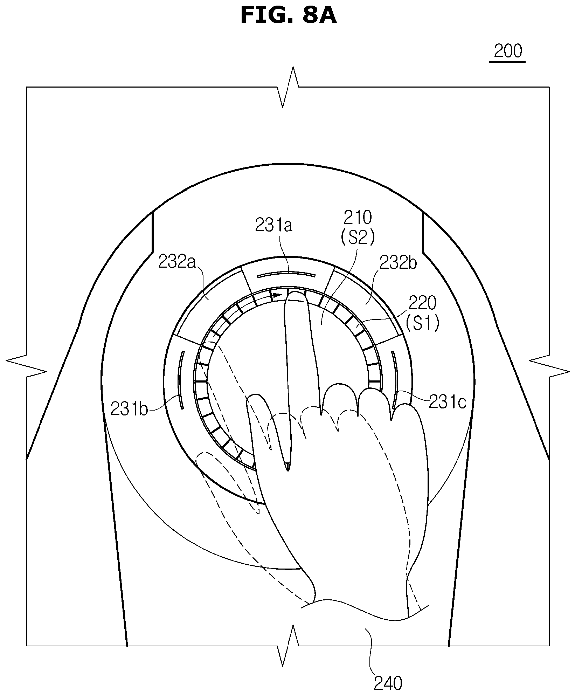

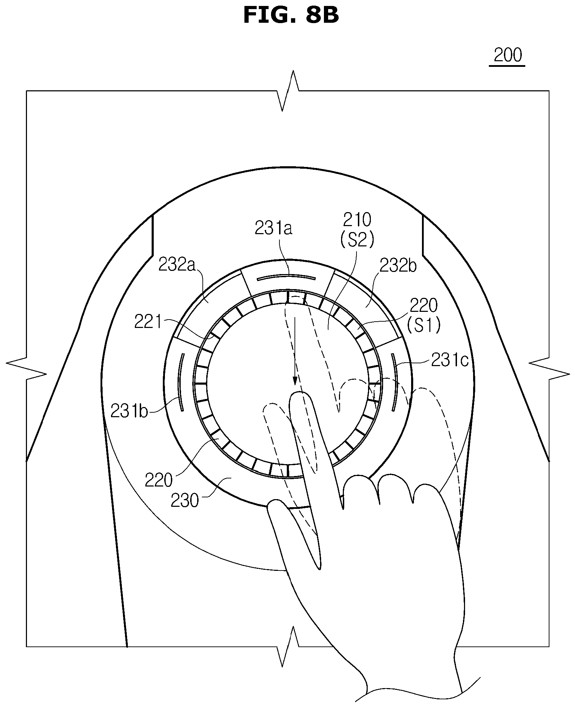

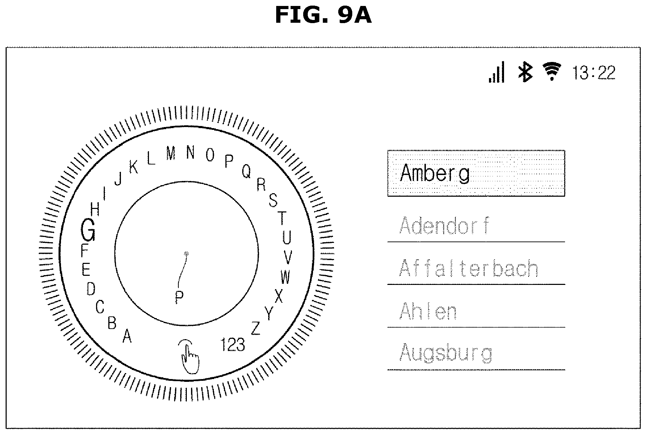

Hereinafter, one exemplary embodiment of a method of operating the UI being displayed on the display 34 by a touch gesture will be described. For convenience of the descriptions, it may be assumed that the touch gesture adopts the exemplary embodiment described with reference to FIGS. 6A to 6C, and the displayed UI may be based on the text input UI shown in FIG. 4A. FIGS. 8A and 8B are views illustrating a method of receiving input of object select gestures through the touch input device according to the exemplary embodiments described with reference to FIGS. 6A to 6C, and FIGS. 9A to 9C are views illustrating a method of operating a UI by a controller according to touch gestures described with reference to FIGS. 8A and 8B.

When the text input UI shown in FIG. 4A is displayed, a passenger may touch a second position which is an arbitrary position of a first region S1 in which a swiping input unit of a touch input device 200 is provided. As a result, as shown in FIG. 9A, the controller 400 may be configured to operate the display 34 to enlarge a text object G that correspond to the second position compared to neighboring text objects. The display 34 may be configured to display that the text object G is in a selectable state. As described above, since the swiping input unit may be configured to detect the swiping gesture, the passenger may input a gesture which moves in a clockwise or counterclockwise direction from the second position of the first region S1. FIG. 8A is illustrated when the gesture which moves in the clockwise direction from the second position of the first region S1 is input.

When the swiping gesture is detected from the second position of the first region S1, the display 34 may be configured to sequentially enlarge and display objects in a direction the same as the swiping direction. When the swiping gesture in the clockwise direction is detected as shown in FIG. 8A, the controller 400 may be configured to operate the display 34 to sequentially enlarge and display text objects in the clockwise direction from the text object G.

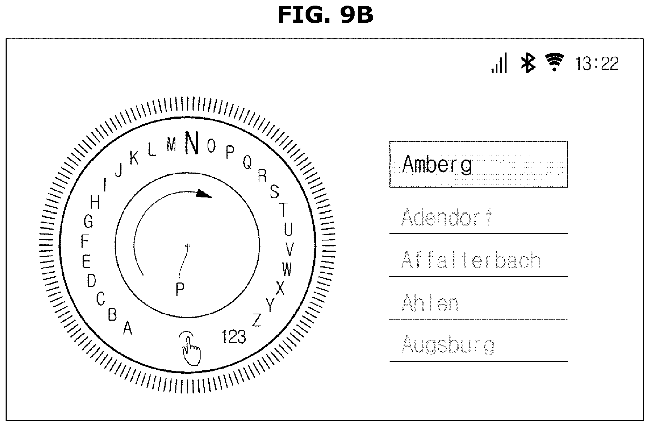

While the passenger visually checks the text objects enlarged that correspond to the swiping gesture through the display 34, the swiping may stop when the text object to be selected is enlarged. In other words, at a first position which is a position at which a gesture moving from the second position of the first region S1 stops, the controller 400 may be configured to operate the display 34 to enlarge and display the text object to be selected by the passenger. FIG. 9B is an example when the text object to be selected by the passenger is a text object N. As shown in FIG. 9B, the passenger may input the gesture moves from the first position of the first region S1, at which the swiping stopped, to the second region S2. Such a gesture may refer to an object select command that corresponds to the first position.

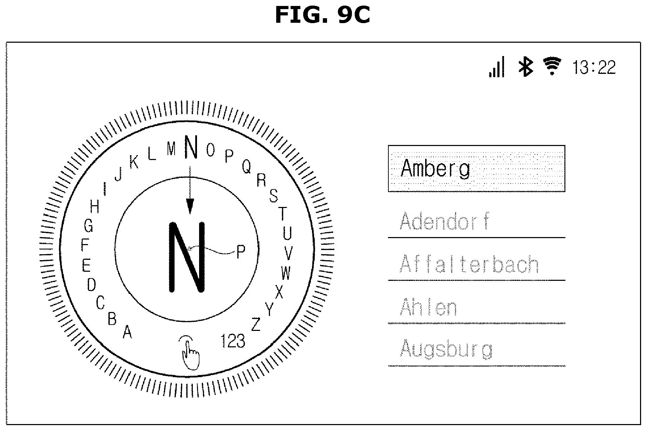

As a result, the controller 400 may be configured to operate a vehicle based on selection of the object that corresponds to the first position. At the same time, the controller 400 may be configured to operate the display 34 to display the selection of the object that corresponds to the first position. Referring to FIG. 9C, the display 34 may be configured to display the selected text object N inside a region formed by an arrangement of the plurality of text objects, and thus the passenger may be informed of the selection of the text object N.

Meanwhile, when a gesture which continuously moves to the first region S1 after the gesture moves from the first position to the second region S2 is detected, the controller 400 may be configured to operate the display 34 to display the cancellation of the selection of the selected object. For example, as shown in FIG. 9C, after displaying that the text object N is selected, when a select cancellation gesture is detected, the display 34 may not display the text object N displayed inside the region formed by the arrangement of the text objects.

Moreover, when the touch input device 200 is configured to detect a pressure with a touch through the concave region, the UI may be operated based on the results of the touch gesture and the pressure detection. For example, when a gesture moving from the first position to the second region S2 is detected after the pressure is detected at the first position, the controller 400 may be configured to recognize the detected gesture as an object select command. Thus, the display 34 may be configured to display the selection of the object that corresponds to the first position when the gesture moving from the first position to the second region S2 after the pressure is detected at the first position.

Furthermore, when a pressure is detected in the second region S2 after the gesture moving from the first position to the second region S2 is detected, the controller 400 may be configured to recognize the detected gesture as the object select command. Thus, the display may be configured to display the selection of the object that corresponds to the first position when the pressure is detected in the second region S2 after the gesture moving from the first position to the second region S2 is detected.

In addition, when a pressure is detected in the second region S2 after the pressure is detected at the first position in the gesture moving from the first position to the second region S2 is detected, the controller 400 may be configured to recognize the detected gesture as the object select command. Thus, the display 34 may be configured to display the selection of the object that corresponds to the first position when the pressure is detected in the second region S2 after the pressure is detected at the first position and the gesture moving from the first position to the second region S2 is detected.

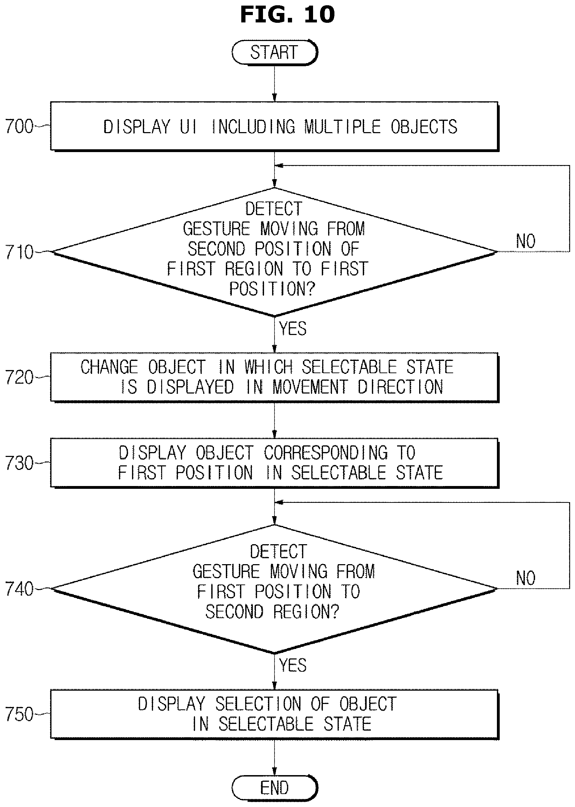

FIG. 10 is a flowchart of a method of controlling a vehicle according to one exemplary embodiment. First, the display 34 may be configured to display a UI including a plurality of objects (S700). In particular, the object may be all objects which may be selected by input of a passenger. An exemplary embodiment of the object may include a text input by selection of the passenger, an icon to execute a selected application, a folder including the icon to execute the selected application, and a parent folder including a subfolder. Specifically, in the displayed UI, the plurality of objects may be arranged to surround a predetermined reference point P. Due to the arrangement of the objects, the passenger may more easily operate the UI through the concave region of the touch input device 100 or 200.

Additionally, the touch input device 100 or 200 may be configured to determine whether a gesture moving from the second position of the first region S1 to the first position of the concave region of the touch input device 100 or 200 is detected (S710). In particular, the first position is a position where a touch which selects the desired object of a passenger among the plurality of objects to be selectable state is detected, and the second position may refer to an arbitrary position different from the first position. When the gesture is not detected, the above process may be repeated and the gesture may be determined again.

When a gesture moving from the second position to the first position is detected, the controller 400 may be configured to operate the display 34 to sequentially display the objects in a movement direction to be in the selectable state (S720). For example, when the gesture moving from the second position to the first position in a clockwise direction is detected, the display 34 may be configured to sequentially display the plurality of objects, which are in the selectable states, in the clockwise direction. Since the gesture finally stops at the first position, the controller 400 may be configured to operate the display 34 to display that the object that corresponds to the first position is in the selectable state (S730).

The touch input device 100 or 200 may then be configured to determine whether a gesture moving from the first position to the second region S2 is detected (740). When the gesture is not detected, the above process may be repeated and the gesture may be determined again. When the gesture is detected, the passenger is determined to have selected the object that corresponds to the first position. Accordingly, the controller 400 may be configured to operate the display 34 to display the selection of the object in a selectable state that corresponds to the first position (S750).

As is apparent from the above description, according to one exemplary embodiment of the vehicle and the method of controlling the same, a passenger may intuitively input a touch gesture using a touch input device including a concave region. As a result, an accuracy of gesture input of the passenger may be improved, and furthermore, an operating load of the vehicle may be reduced and the safety of driving may be improved.

Although a few exemplary embodiments of the present invention have been shown and described, it would be appreciated by those skilled in the art that changes may be made in these exemplary embodiments without departing from the principles and, the scope of which is defined in the claims.

## Claims

1. A vehicle (1) comprising:
a display configured to display (34) a user interface, UI, including a plurality of objects
a touch input device (100, 200) including a concave region, the touch input device (100, 200) being configured to detect a touch gesture; and
a controller (400) configured to control the display (34) to display a selection of an object corresponding to a first position among the plurality of objects when a gesture moving from the first position on a periphery of the concave region to the center thereof is detected,
wherein the display is configured to display a text input user interface arranged so that a plurality of text objects surround a predetermined reference point (P),
wherein the concave region comprises a first region (110, 210) disposed on the center of the concave region and a second region (120, 220) disposed on an edge portion of the first region (110, 210), and
the second region (120, 220) includes a gradient greater than a gradient in a tangential direction of the first region (110, 210) at a boundary between the first region (110, 210) and the second region (120, 220).

2. The vehicle (1) of claim 1, wherein the touch input device (100, 200) includes the concave region divided into a second region (120, 220) formed at the center in a circular shape and a first region (110, 210) formed to surround a circumferential edge of the second region (120, 220).

3. The vehicle (1) of claim 2, wherein the controller (400) is configured to control the display (34) to display that the object corresponding to the first position among the plurality of objects is in a selectable state when a touch is detected at the first position of the first region (110, 210).

4. The vehicle (1) of claim 3, wherein the controller (400) is configured to control the display (34) to display a selection of the object in the selectable state when a gesture moving from the first position of the first region (110, 210) to the second region (120, 220) is detected, and wherein the controller (400) is configured to control the display (34) to display a cancellation of the selection of the selected object when a gesture which continuously moves to the first region (110, 210) after the gesture moves to the second region (120, 220) is detected.

5. The vehicle (1) of claim 3, wherein when a gesture moving from a second position of the first region (110, 210) to the first position is detected, the controller (400) is configured to control the display (34) to display that the object in a selectable state among the plurality of objects is changed corresponding to the movement of the gesture.

6. The vehicle (1) of claim 2, wherein the touch input device (100, 200) is configured to detect a pressure applied to the concave region, and
wherein the controller (400) is configured to control the display to display a selection of the object corresponding to the first position when a gesture moving to the second region (120, 220) is detected after the pressure is detected at the first position.

7. The vehicle (1) of claim 2, wherein the touch input device is configured to detect a pressure applied to the concave region, and
wherein the controller is configured to control the display (34) to display a selection of the object corresponding to the first position when the pressure is detected in the second region (120, 220) after a gesture moving from the first position to the second region (120, 220) is detected.

8. The vehicle (1) of claim 1, wherein the display (34) is configured to display the UI arranged so that the plurality of objects surround a predetermined reference point (P).

9. A method of controlling a vehicle (1) including a touch input device having a concave region which detects a touch gesture, comprising:
displaying a UI including a plurality of objects, wherein a text input user interface arranged so that a plurality of text objects surround a predetermined reference point (P) is displayed; and
when a gesture moving from a first position on a periphery of the concave region to the center thereof is detected, displaying a selection of an object corresponding to the first position among the plurality of objects is selected,
wherein the concave region comprises a first region (110, 210) disposed on the center of the concave region and a second region (120, 220) disposed on an edge portion of the first region (110, 210), and
the second region (120, 220) includes a gradient greater than a gradient in a tangential direction of the first region (110, 210) at a boundary between the first region (110, 210) and the second region (120, 220).

10. The method of claim 9, further comprising dividing the concave region into a second region (120, 220) formed at the center thereof in a circular shape and a first region (110, 210) formed to surround a circumferential edge of the second region (120, 220).

11. The method of claim 10, wherein the displaying of the selection of the object corresponding to the first position includes displaying that the object corresponding to the first position among the plurality of objects is in a selectable state when a touch is detected at the first position of the first region (110, 210).

12. The method of claim 11, wherein the displaying of the selection of the object corresponding to the first position further includes displaying a selection of the object in the selectable state when a gesture moving from the first position of the first region (110, 210) to the second region (120, 220) is detected and wherein the method of controlling the vehicle further comprises displaying a cancellation of the selection of the selected object when a gesture which continuously moves to the first region (110, 210) after the gesture moves to the second region (120, 220) is detected.

13. The method of claim 11, wherein, when a gesture moving from a second position of the first region (110, 210) to the first position is detected, the displaying of the selection of the object corresponding to the first position further includes displaying that the object in a selectable state among the plurality of objects is changed corresponding to the movement of the gesture.

14. The method of claim 13, wherein the touch input device (100, 200) detects a pressure in the concave region, and
wherein the displaying of the selection of the object corresponding to the first position includes displaying a selection of the object corresponding to the first position when a gesture moving from the first position to the second region (120, 220) is detected after the pressure is detected at the first position.

15. The method of claim 9, wherein the displaying of the UI includes displaying the UI arranged so that the plurality of objects surround a predetermined reference point (P).

## Patentansprüche

1. Fahrzeug (1), umfassend:
eine Anzeige, die dazu ausgelegt ist, eine Benutzeroberfläche (UI) mit einer Vielzahl von Objekten anzuzeigen (34);
eine Berührungseingabevorrichtung (100, 200) mit einem konkaven Bereich, wobei die Berührungseingabevorrichtung (100, 200) dazu ausgelegt ist, eine Berührungsgeste zu erkennen; und
eine Steuervorrichtung (400), die dazu ausgelegt ist, die Anzeige (34) zu steuern, um eine Auswahl eines Objekts entsprechend einer ersten Position unter der Vielzahl von Objekten anzuzeigen, wenn eine Geste erkannt wird, die sich von der ersten Position an einem Rand des konkaven Bereichs zu dessen Mitte bewegt,
wobei die Anzeige dazu ausgelegt ist, eine Texteingabebenutzeroberfläche anzuzeigen, die so eingerichtet ist, dass eine Vielzahl von Textobjekten einen vorbestimmten Referenzpunkt (P) umgibt,
wobei der konkave Bereich einen in der Mitte des konkaven Bereichs angeordneten ersten Bereich (110, 210) und einen an einem Randabschnitt des ersten Bereichs (110, 210) angeordneten zweiten Bereich (120, 220) umfasst, und
der zweite Bereich (120, 220) einen Gradienten enthält, der größer als ein Gradient in einer tangentialen Richtung des ersten Bereichs (110, 210) an einer Grenze zwischen dem ersten Bereich (110, 210) und dem zweiten Bereich (120, 220) ist.

2. Fahrzeug (1) gemäß Anspruch 1, wobei die Berührungseingabevorrichtung (100, 200) den konkaven Bereich enthält, der in einen in der Mitte kreisförmig ausgebildeten zweiten Bereich (120, 220) und einen ersten Bereich (110, 210), der dazu ausgebildet ist, einen umlaufenden Rand des zweiten Bereichs (120, 220) zu umgeben, unterteilt ist.

3. Fahrzeug (1) gemäß Anspruch 2, wobei die Steuervorrichtung (400) dazu ausgelegt ist, die Anzeige (34) zu steuern, um anzuzeigen, dass das der ersten Position entsprechende Objekt unter der Vielzahl von Objekten in einem auswählbaren Zustand ist, wenn eine Berührung an der ersten Position des ersten Bereichs (110, 210) erkannt wird.

4. Fahrzeug (1) gemäß Anspruch 3, wobei die Steuervorrichtung (400) dazu ausgelegt ist, die Anzeige (34) zu steuern, eine Auswahl des Objekts in dem auswählbaren Zustand anzuzeigen, wenn eine Geste, die sich von der ersten Position des ersten Bereichs (110, 210) zu dem zweiten Bereich (120, 220) bewegt, erkannt wird, und
wobei die Steuervorrichtung (400) dazu ausgelegt ist, die Anzeige (34) zu steuern, eine Aufhebung der Auswahl des ausgewählten Objekts anzuzeigen, wenn eine Geste erkannt wird, die sich kontinuierlich zu dem ersten Bereich (110, 210) bewegt, nachdem sich die Geste zu dem zweiten Bereich (120, 220) bewegt hat.

5. Fahrzeug (1) gemäß Anspruch 3, wobei, wenn eine Geste erkannt wird, die sich von einer zweiten Position des ersten Bereichs (110, 210) zu der ersten Position bewegt, die Steuervorrichtung (400) dazu ausgelegt ist, die Anzeige (34) zu steuern, um anzuzeigen, dass das Objekt in einem auswählbaren Zustand unter der Vielzahl von Objekten entsprechend der Bewegung der Geste geändert wird.

6. Fahrzeug (1) gemäß Anspruch 2, wobei die Berührungseingabevorrichtung (100, 200) dazu ausgelegt ist, einen auf den konkaven Bereich ausgeübten Druck zu erkennen, und
wobei die Steuervorrichtung (400) dazu ausgelegt ist, die Anzeige zu steuern, um eine Auswahl des Objekts entsprechend der ersten Position anzuzeigen, wenn eine Geste erkannt wird, die sich zu dem zweiten Bereich (120, 220) bewegt, nachdem der Druck an der ersten Position erkannt wurde.

7. Fahrzeug (1) gemäß Anspruch 2, wobei die Berührungseingabevorrichtung dazu ausgelegt ist, einen auf den konkaven Bereich ausgeübten Druck zu erkennen, und
wobei die Steuervorrichtung dazu ausgelegt ist, die Anzeige (34) zu steuern, um eine Auswahl des Objekts entsprechend der ersten Position anzuzeigen, wenn der Druck in dem zweiten Bereich (120, 220) erkannt wird, nachdem eine Geste, die sich von der ersten Position zu dem zweiten Bereich (120, 220) bewegt, erkannt wird.

8. Fahrzeug (1) gemäß Anspruch 1, wobei die Anzeige (34) dazu ausgelegt ist, die UI so angeordnet anzuzeigen, dass die Vielzahl der Objekte einen vorbestimmten Referenzpunkt (P) umgibt.

9. Verfahren zum Steuern eines Fahrzeugs (1) mit einer Berührungseingabevorrichtung, das einen konkaven Bereich aufweist, der eine Berührungsgeste erkennt, umfassend:
Anzeigen einer UI mit einer Vielzahl von Objekten, wobei eine Texteingabebenutzeroberfläche so eingerichtet ist, dass eine Vielzahl von Textobjekten einen vorbestimmten Referenzpunkt (P) umgibt; und
wenn eine Geste erkannt wird, die sich von einer ersten Position an einem Rand des konkaven Bereichs zur Mitte desselben bewegt, das Anzeigen einer Auswahl eines Objekts entsprechend der ersten Position aus der Vielzahl von Objekten ausgewählt wird,
wobei der konkave Bereich einen in der Mitte des konkaven Bereichs angeordneten ersten Bereich (110, 210) und einen an einem Randabschnitt des ersten Bereichs (110, 210) angeordneten zweiten Bereich (120, 220) umfasst, und
der zweite Bereich (120, 220) einen Gradienten enthält, der größer als ein Gradient in einer tangentialen Richtung des ersten Bereichs (110, 210) an einer Grenze zwischen dem ersten Bereich (110, 210) und dem zweiten Bereich (120, 220) ist.

10. Verfahren gemäß Anspruch 9, ferner umfassend Unterteilen des konkaven Bereichs in einen in dessen Mitte kreisförmig ausgebildeten zweiten Bereich (120, 220) und einen ersten Bereich (110, 210), der dazu ausgebildet ist, einen umlaufenden Rand des zweiten Bereichs (120, 220) zu umgeben.

11. Verfahren gemäß Anspruch 10, wobei das Anzeigen der Auswahl des der ersten Position entsprechenden Objekts das Anzeigen enthält, dass das der ersten Position entsprechende Objekt unter der Vielzahl von Objekten in einem auswählbaren Zustand ist, wenn eine Berührung an der ersten Position des ersten Bereichs (110, 210) erkannt wird.

12. Verfahren gemäß Anspruch 11, wobei das Anzeigen der Auswahl des der ersten Position entsprechenden Objekts ferner das Anzeigen einer Auswahl des Objekts in dem auswählbaren Zustand enthält, wenn eine Geste erkannt wird, die sich von der ersten Position des ersten Bereichs (110, 210) zu dem zweiten Bereich (120, 220) bewegt, und
wobei das Verfahren zum Steuern des Fahrzeugs ferner das Anzeigen einer Aufhebung der Auswahl des ausgewählten Objekts umfasst, wenn eine Geste erkannt wird, die sich kontinuierlich zu dem ersten Bereich (110, 210) bewegt, nachdem sich die Geste zu dem zweiten Bereich (120, 220) bewegt hat.

13. Verfahren gemäß Anspruch 11, wobei, wenn eine Geste erkannt wird, die sich von einer zweiten Position des ersten Bereichs (110, 210) zu der ersten Position bewegt, das Anzeigen der Auswahl des Objekts entsprechend der ersten Position ferner das Anzeigen enthält, dass das Objekt in einem auswählbaren Zustand unter der Vielzahl von Objekten entsprechend der Bewegung der Geste geändert wird.

14. Verfahren gemäß Anspruch 13, wobei die Berührungseingabevorrichtung (100, 200) einen Druck im konkaven Bereich erkennt, und
wobei das Anzeigen der Auswahl des Objekts entsprechend der ersten Position das Anzeigen einer Auswahl des Objekts entsprechend der ersten Position enthält, wenn eine Geste erkannt wird, die sich von der ersten Position zu dem zweiten Bereich (120, 220) bewegt, nachdem der Druck an der ersten Position erkannt wurde.

15. Verfahren gemäß Anspruch 9, wobei das Anzeigen der UI das Anzeigen der UI in der Weise enthält, dass die Vielzahl der Objekte einen vorbestimmten Referenzpunkt (P) umgibt.

## Revendications

1. Véhicule (1) comprenant :
un écran configuré pour afficher (34) une interface utilisateur, UI, incluant une pluralité d'objets ;
un dispositif d'entrée tactile (100, 200) incluant une région concave, le dispositif d'entrée tactile (100, 200) étant configuré pour détecter un geste de toucher ; et
un contrôleur (400) configuré pour commander l'écran (34) pour afficher une sélection d'un objet correspondant à une première position parmi la pluralité d'objets lorsqu'un geste se déplaçant de la première position sur une périphérie de la région concave jusqu'au centre de celle-ci est détecté,
dans lequel l'écran est configuré pour afficher une interface utilisateur d'entrée de texte agencée de façon qu'une pluralité d'objets texte entourent un point de référence prédéterminé (P),
dans lequel la région concave comprend une première région (110, 210) disposée au centre de la région concave et une seconde région (120, 220) disposée sur une partie de bord de la première région (110, 210) et la seconde région (120, 220) inclut un gradient supérieur à un gradient dans une direction tangentielle de la première région (110, 210) à une limite entre la première région (110, 210) et la seconde région (120, 220).

2. Véhicule (1) selon la revendication 1, dans lequel le dispositif d'entrée tactile (100, 200) inclut la région concave divisée en une seconde région (120, 220) formée au centre de forme circulaire et une première région (110, 210) formée pour entourer un bord circonférentiel de la seconde région (120, 220).

3. Véhicule (1) selon la revendication 2, dans lequel le contrôleur (400) est configuré pour commander l'écran (34) pour afficher que l'objet correspondant à la première position parmi la pluralité d'objets est dans un état pouvant être sélectionné lorsqu'un toucher est détecté à la première position de la première région (110, 210).

4. Véhicule (1) selon la revendication 3, dans lequel le contrôleur (400) est configuré pour commander l'écran (34) pour afficher une sélection de l'objet dans l'état pouvant être sélectionné lorsqu'un geste se déplaçant de la première position de la première région (110, 210) à la seconde région (120, 220) est détecté, et
dans lequel le contrôleur (400) est configuré pour commander l'écran (34) pour afficher une annulation de la sélection de l'objet sélectionné lorsqu'un geste qui se déplace en continu vers la première région (110, 210) après que le geste se déplace vers la seconde région (120, 220) est détecté.

5. Véhicule (1) selon la revendication 3, dans lequel lorsqu'un geste se déplaçant d'une seconde position de la première région (110, 210) à la première position est détecté, le contrôleur (400) est configuré pour commander l'écran (34) pour afficher que l'objet dans un état pouvant être sélectionné parmi la pluralité d'objets est modifié en correspondance avec le déplacement du geste.

6. Véhicule (1) selon la revendication 2, dans lequel le dispositif d'entrée tactile (100, 200) est configuré pour détecter une pression appliquée sur la région concave, et
dans lequel le contrôleur (400) est configuré pour commander l'écran pour afficher une sélection de l'objet correspondant à la première position lorsqu'un geste se déplaçant vers la seconde région (120, 220) est détecté après que la pression est détectée à la première position.

7. Véhicule (1) selon la revendication 2, dans lequel le dispositif d'entrée tactile est configuré pour détecter une pression appliquée sur la région concave, et
dans lequel le contrôleur est configuré pour commander l'écran (34) pour afficher une sélection de l'objet correspondant à la première position lorsque la pression est détectée dans la seconde région (120, 220) après qu'un geste se déplaçant de la première position à la seconde région (120, 220) est détecté.

8. Véhicule (1) selon la revendication 1, dans lequel l'écran (34) est configuré pour afficher l'UI disposée de façon que la pluralité d'objets entourent un point de référence prédéterminé (P).

9. Procédé de commande d'un véhicule (1) incluant un dispositif d'entrée tactile ayant une région concave qui détecte un geste de toucher, comprenant :
l'affichage d'une UI incluant une pluralité d'objets, dans lequel une interface utilisateur d'entrée de texte disposée afin qu'une pluralité d'objets texte entourent un point de référence prédéterminé (P) est affichée ; et
lorsqu'un geste se déplaçant d'une première position sur une périphérie de la région concave vers le centre de celle-ci est détecté, l'affichage d'une sélection d'un objet correspondant à la première position parmi la pluralité d'objets est sélectionné,
dans lequel la région concave comprend une première région (110, 210) disposée au centre de la région concave et une seconde région (120, 220) disposée sur une partie de bord de la première région (110, 210) et la seconde région (120, 220) inclut un gradient supérieur à un gradient dans une direction tangentielle de la première région (110, 210) à une limite entre la première région (110, 210) et la seconde région (120, 220).

10. Procédé selon la revendication 9, comprenant en outre la division de la région concave en une seconde région (120, 220) formée en son centre de forme circulaire et une première région (110, 210) formée pour entourer un bord circonférentiel de la seconde région (120, 220).

11. Procédé selon la revendication 10, dans lequel l'affichage de la sélection de l'objet correspondant à la première position inclut l'affichage du fait que l'objet correspondant à la première position parmi la pluralité d'objets est dans un état pouvant être sélectionné lorsqu'un toucher est détecté à la première position de la première région (110, 210).

12. Procédé selon la revendication 11, dans lequel l'affichage de la sélection de l'objet correspondant à la première position inclut en outre l'affichage d'une sélection de l'objet dans l'état pouvant être sélectionné lorsqu'un geste se déplaçant de la première position de la première région (110, 210) à la seconde région (120, 220) est détecté et
le procédé de commande de véhicule comprenant en outre l'affichage d'une annulation de la sélection de l'objet sélectionné lorsqu'un geste qui se déplace en continu vers la première région (110, 210) après que le geste se déplace vers la seconde région (120, 220) est détecté.

13. Procédé selon la revendication 11, dans lequel lorsqu'un geste se déplaçant d'une seconde position de la première région (110, 210) à la première position est détecté, l'affichage de la sélection de l'objet correspondant à la première position comprend en outre l'affichage du fait que l'objet dans un état pouvant être sélectionné parmi la pluralité d'objets est modifié en correspondance avec le déplacement du geste.

14. Procédé selon la revendication 13, dans lequel le dispositif d'entrée tactile (100, 200) détecte une pression dans la région concave, et
dans lequel l'affichage de la sélection de l'objet correspondant à la première position comprend l'affichage d'une sélection de l'objet correspondant à la première position lorsqu'un geste se déplaçant de la première position à la seconde région (120, 220) est détecté après que la pression est détectée à la première position.

15. Procédé selon la revendication 9, dans lequel l'affichage de l'UI comprend l'affichage de l'UI disposée de façon que la pluralité d'objets entourent un point de référence prédéterminé (P).
